# EUROPEAN PATENT APPLICATION

(11) **EP 2 478 772 A1**
(43) Date of publication of application: **25.07.2012**
(21) Application number: 11151646.4
(22) Date of filing: 21.01.2011
(51) Int. Cl.: A22C 13/00

(54) **Casing for sausage production and method for providing such a casing**

(71) Applicant: Omninet B.V., 9561 AR Ter Apel (NL)
(72) Inventor: Dijkstra, Jan, 9561 AB, Ter Apel (NL)
(74) Representative: 't Jong, Bastiaan Jacob

(57) **Abstract**

The invention relates to a casing for sausage production, the casing being a tube shaped knitted stockinette (4), characterized in that the stockinette is knitted out of a single type of yarn (2) and wherein the stockinette comprises zones (10) of condensed stitches.
The invention also relates to a method for producing a casing according to the invention.

## Description

The invention relates to a casing for sausage production, the casing being a tube shaped knitted stockinette.

When making sausages it is known to prepare a mixture of grinded meat and other ingredients like spices and the like. This prepared mixture is then stuffed into a tubular casing. The casing was originally made from bowels from for example pigs. By stuffing the mixture in the casing, the mixture is compressed resulting in a compact structure for the meat mixture. The ends of the casing are then pinched resulting in the typical sausage shape. The sausages can be dried or cooked. Also ham is made in the same way by stuffing a casing with meat.

Sausage and ham making at an industrial scale is typically done in a similar way. However instead of the common casing of animal origin, one uses casings made from fibrous, cellulose or plastic material. It is also known to use knitted stockinette as a casing. Stockinette is knitted similar to socks and has a tubular shape. These synthetic casings enable the industrial sausage maker to make sausages of substantial length and with a constant caliber. Such a sausage can be cut in parts of equal length resulting in pieces of predictable weight, which is particular useful for this kind of industry.

When using casings of animal origin, the caliber of the sausage varies over the length of the sausage as a result of the irregularities in the bowels used. The resulting sausage has an irregular surface and a varying diameter over the length of the sausage. These features are typical for handmade sausages.

It is desired to produce at industrial scale sausages which look handmade, but have the predictable properties, like weight and diameter of industrial made sausages.

To this end it is known to provide casings, which provide a tubular shape with wall zones of varying elasticity. When such a casing is stuffed with a meat mixture, some wall zones will bulge out more, than other wall zones, resulting in a sausage with an irregular shape.

For example CH662543 discloses a casing, which is provided on the outside with a wide-meshed netlike layer. When this casing is stuffed with a meat mixture, the inner casing layer envelopes the meat mixture as is typical in sausage making. However, the outer netlike layer restricts the expansion of the casing layer at certain zones, such that a sausage is provided having an irregular surface.

Another example is known from US 5855231, which discloses a knit having a tubular shape. The knit is made out of a main type of yarn and a secondary type of yarn. This second type of yarn is integrated in the knit to provide restrictions in the elasticity of the knit out of the main type of yarn.

The disadvantage of the use of a restricting yarn of netlike outer layer, is that this restriction has to be cut before the sausage can be removed from the casing.

Having to cut the casing, in particular at industrial scale, before the sausage or ham can be further processed is cumbersome.

Another disadvantage of the above mentioned casings with restricting yarns or restricting netlike layer are the substantially higher costs compared to the single layer casings out of fibrous, cellulose, plastic material or knitted stockinette.

It is an object of the invention to reduce or even remove the above mentioned disadvantages.

This object is achieved according to the invention with a casing according to the preamble, which is characterized in that the stockinette is knitted out of a single type of yarn and wherein the stockinette comprises zones of condensed stitches.

By providing zones of condensed stitches the elasticity of the stockinette is influenced, such that zones with a higher elasticity are provided and zones with a lower elasticity for providing an irregular surface to sausages and hams. The resulting stockinette is made from a single yarn such that the costs and the complexity of producing the casing are reduced.

A single type of yarn is to be understood a single thread out of which the knit is made. The thread could be composed out of a number of fibers of different types of materials. These fibers are typically twined to the single type of thread.

Because the single type of yarn is used and the zone with reduced elasticity are made out of condensed stitches, it is possible to remove the casing from a produced sausage or ham, without having to cut the casing. Simply by exerting some force on the condensed stitches, these stitches will expand and stretch similar to the non condensed stitches.

In an embodiment of the casing according to the invention the condensed stitches are adhered to each other to reduce the elasticity of the stockinette in the zones of condensed stitches. The adhering of the stitches could be done by using a type of glue or the like, but preferably by using heat deformation.

In a preferred embodiment of the casing according to the invention the yarns in the zones of condensed stitches are shrunk by heat. By using a suitable material for the yarns of the stockinette, heat can be used for shrinking parts of the yarns, such that the stitches are shrunk and the elasticity thereof is reduced.

In another preferred embodiment of the casing according to the invention, the zones of condensed stitches provide a netlike structure on the stockinette. This will provide the desired irregular surface of the produced sausage or ham.

It is very preferred that the single type of yarn comprises polyester fibers. The polyester fibers are easy to use in a knitting machine for knitting the stockinette, while the polyester fibers also display the feature of shrinking when being heated to above a certain temperature.

The invention also relates to a method for producing a casing according to the invention, which method comprises the steps of:
- knitting a tube shaped stockinette out of a single type of yarn;
- selectively heating zones of the knitted stockinette to provide zones of condensed stitches.

The selective heating of zones of the knitted stockinette could be done by a laser or a jet of heated air.

Preferably, the knitted stockinette is selectively heated by pressing the knitted stockinette between two heated moulds, each provided with a corresponding pattern.

By pressing the knitted stockinette between two heated moulds, the yarns are heated such that the stitches will adhere to each other resulting in zones of condensed stitches or parts of the yarns will shrink due to the heat also resulting in zones of condensed stitches.

Preferably, the pattern on each of the moulds is cross shaped to provide a netlike structure on the stockinette. This cross shaped pattern of the moulds can easily be repeated and results in a netlike structure on the stockinette, when the stockinette is advanced through the moulds and the moulds are pressed together at regular intervals.

In yet another embodiment of the method according to the invention the tube shaped stockinette is flattened after knitting and then transported between the two heated moulds. The two heated moulds can be pressed together. Each of the moulds provides the zones of condensed stitches on the two sides of the flattened stockinette.

In another preferred embodiment of the method according to the invention the stockinette is knitted by a single system knitting machine. Stockinette knitted by a multi-system knitting machine can also be stretched easily in diagonal direction. By knitting on a single system machine, the strechability in diagonal direction is reduced and only results from a combined stretching in longitudinal and transverse direction. However at the zones with condensed stitches, the stretchability in longitudinal and transverse direction is limited, such that stretching in diagonal direction is also substantially reduced. This results in better pronounced protrusions on the produced sausage.

Although netlike structures are easily made with the invention, it is also possible to provide other structures in the surface of the produced sausages and hams and even words or logo's could be provided in the sausages and hams with the method according to the invention.

These and other features of the invention will be elucidated in conjunction with the accompanying drawings.
Figure 1 shows a schematic representation of an embodiment of the method according to the invention.
Figure 2 shows a sausage produced with a casing according to the invention.
Figure 3 shows a top view of an embodiment of a casing according to the invention.
Figure 4 shows a detail of the embodiment of figure 3.

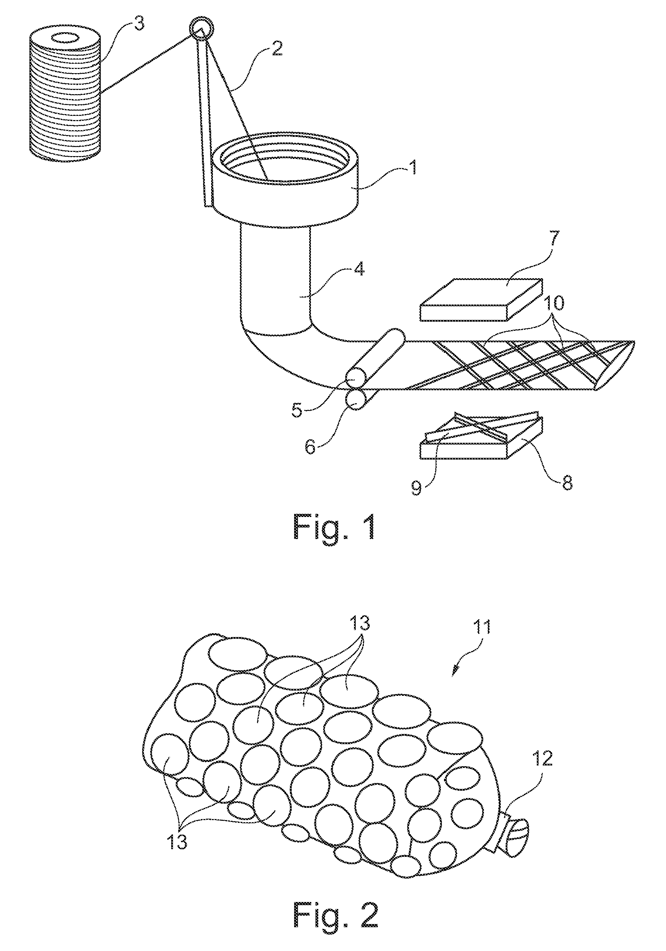

Figure 1 shows a stockinette knitting machine 1. A yarn 2 is fed from a spool 3 to the knitting machine 1. The knitting machine 1 knits from the yarn 2 a tubular stockinette 4.

The knitted stockinette 4 is then fed trhough two drums 5, 6 which flatten the tubular stockinette 4. Subsequently, the flattened stockinette 4 is transported between two moulds 7, 8 which are heated and pressed together at regular intervals.

Each contact surface of the moulds 7, 8 is provided with a cross shaped rib 9, which produces the netlike structure 10 on the stockinette 4, resulting in a casing according to the invention.

When a casing according to the invention is filled with a meat mixture a sausage 11 is produced. One end of the casing is closed off by a clip 12. The meat mixture is stuffed in the casing. Due to the netlike structure 10 provided on the stockinette 4, the stuffed meat mixture will protrude through the mesh of the netlike structure, such that bulges 13 are provided on the sausage 11 and an irregular surface is created.

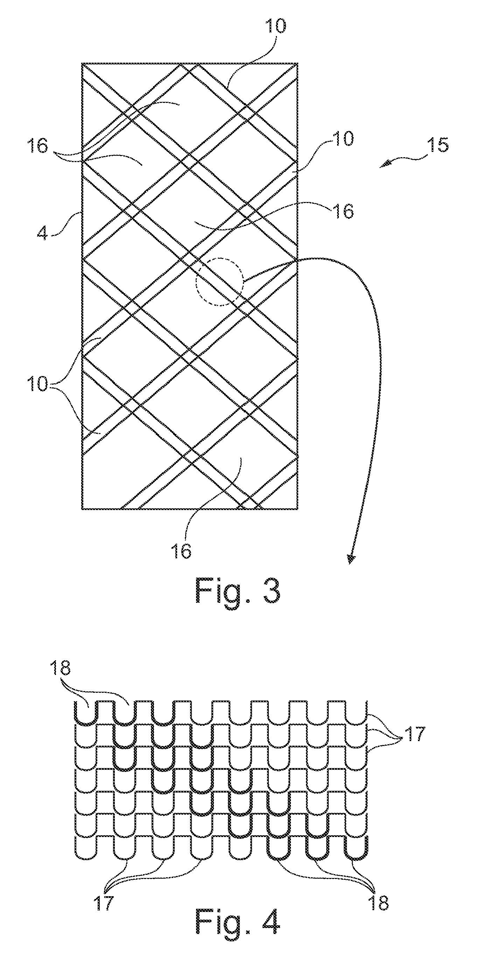

Figure 3 shows a top view of the casing 15 according to the invention. The casing 15 is formed out of a tube shaped knitted stockinette 4 which is provided with zones 10 of condensed stitches. This condensing of stitches is achieved by the heated moulds 7, 8, which are pressed at regular intervals against the stockinette 4. Between the zones 10 of condensed stitches meshes 16 are provided, which produce the bulges 13 on a sausage when the casing 15 is stuffed with a mixture of meat.

Figure 4 shows a detail of the casing 15 of figure 3. It is clear that the stockinette 4 is build out of stitches 17. The part of the knit which has been subjected to the heat treatment of the moulds have stitches 18, which are condensed. This condensing of the stitches 18 could be achieved by shrinkage of the yarn due to the heat, by an adhesive and/ or by the pressure of the moulds, which adhere the stitches 18 together and flatten the yarns of said stitches 18.

Although this invention, and in particular the casing according to the invention, is suitable for producing sausages and hams with an handmade appearance, the invention could also be used to produce other elongate objects with irregular surface.

## Claims

1. Casing for sausage production, the casing being a tube shaped knitted stockinette, **characterized in that** the stockinette is knitted out of a single type of yarn and wherein the stockinette comprises zones of condensed stitches.

2. Casing according to claim 1, wherein the condensed stitches are adhered to each other to reduce the elasticity of the stockinette in the zones of condensed stitches.

3. Casing according to claim 2, wherein the condensed stitches are adhered to each other by heat deformation.

4. Casing according to any of the preceding claims, wherein the yarns in the zones of condensed stitches are shrunk by heat.

5. Casing according to any of the preceding claims, wherein the zones of condensed stitches provide a netlike structure on the stockinette.

6. Casing according to any of the preceding claims, wherein the single type of yarn comprises polyester fibers.

7. Method for producing a casing according to any of the preceding claims, which method comprises the steps of:
- knitting a tube shaped stockinette out of a single type of yarn;
- selectively heating zones of the knitted stockinette to provide zones of condensed stitches.

8. Method according to claim 7, wherein the knitted stockinette is selectively heated by pressing the knitted stockinette between two heated moulds, each provided with a corresponding pattern.

9. Method according to claim 8, wherein the pattern on each of the moulds is cross shaped to provide a netlike structure on the stockinette.

10. Method according to claim 8 or 9, wherein after knitting the tube shaped stockinette is flattened and then transported between the two heated moulds.

11. Method according to any of the claims 7 - 10, wherein the stockinette is knitted by a single system knitting machine.
